# FASCICULE DE BREVET EUROPEEN

(11) **EP 0 948 721 B1**
(45) Date de publication et mention de la délivrance du brevet: **14.08.2002**
(21) Numéro de dépôt: 98951559.8
(22) Date de dépôt: 27.10.1998
(51) Int. Cl.: F16H 3/089, F16D 23/06

(54) **BOITE DE VITESSES AVEC MARCHE ARRIERE SYNCHRONISEE POUR VEHICULES AUTOMOBILES**
WECHSELGETRIEBE MIT SYNCHRONISIERTEM RÜCKWÄRTSGANG FÜR KRAFTFAHRZEUGE
GEARBOX WITH SYNCHRONISED REVERSE GEAR FOR MOTOR VEHICLES

(30) Priorité: 31.10.1997 FR 9713679
(43) Date de publication de la demande: 13.10.1999
(73) Titulaire: AUTOMOBILES PEUGEOT, 75116 Paris (FR); AUTOMOBILES CITROEN, 92200 Neuilly-sur-Seine (FR)
(72) Inventeur: MAZET, Stéphane, F-92300 Levallois Perret (FR)
(74) Mandataire: Gendraud, Pierre
(86) Numéro de dépôt international: FR9802292
(87) Numéro de publication internationale: WO9923400

(56) Documents cités:
- US-A- 4 116 082
- US-A- 4 246 993
- US-A- 4 599 846
- US-A- 4 623 054
- US-A- 4 640 141
- US-A- 5 722 291

## Description

La présente invention concerne une boîte de vitesses avec marche arrière synchronisée pour véhicules automobiles.

Elle se rapporte, plus particulièrement, à une boîte de vitesses, telle que décrit notamment par le document US-A-4, 640, 141, qui divulgue une boîte de vitesses selon le préamble de la revendication 1.

Une telle architecture de boîte de vitesses présente l'avantage d'être peu encombrante pour une boîte de vitesses à deux arbres principaux. Cependant, il s'avère que les dispositifs de synchronisation de marche arrière, connus jusqu'à ce jour, dans une telle architecture sont soit rapides mais d'un volume trop encombrant, soit peu encombrant mais pas assez rapide ou encore rapide et peu encombrant mais avec un ressenti au niveau du crabotage qui est important et un niveau sonore élevé.

Le document US 4,246,993 divulgue un dispositif de synchronisation de marche arrière dans lequel un anneau synchroniseur est lié en rotation et disposé coaxialement à la périphérie d'un manchon et qui comporte en outre un système d'armement constitué de ressorts disposés entre le manchon et l'anneau à la périphérie du manchon.

L'invention a pour but de remédier aux inconvénients précités en proposant, pour une boîte de vitesses telle que décrite ci-dessus, un dispositif de synchronisation de la marche arrière qui soit peu encombrant, rapide, et qui permet d'enclencher la marche arrière sans à-coup et sans bruit.

A cet effet, la présente invention a pour objet une boîte de vitesses avec marche arrière synchronisée, notamment pour véhicules automobiles, décrit dans la revendication 1.

La boîte de vitesses suivant l'invention peut d'ailleurs comporter une ou plusieurs des caractéristiques suivantes:
- chacune des encoches du manchon est pourvue d'une embouchure, dont la largeur est supérieure à celle d'une patte, qui lui est reliée par l'intermédiaire de deux faces inclinées formant les rampes de synchronisation du manchon ;
- chacune des pattes est pourvue sur sa face dirigée du côté du machon de deux faces inclinées, formant les rampes de synchronisation de l'anneau qui sont aptes à coopérer avec les faces inclinées du manchon ;
- l'anneau comporte une surface conique extérieure qui est apte à coopérer avec une surface conique complémentaire réalisée sur une partie saillant axialement de la roue folle en direction du manchon ;
- l'anneau comporte trois pattes disposées à 120° par rapport à son centre ;
- l'anneau comporte un diamétre extérieur supérieur au diamétre des dentures intérieures du manchon permettant ainsi d'accroître la rapidité de synchronisation des vitesses des deux roues folles.

Les caractéristiques de l'invention mentionnées ci-dessus, ainsi que d'autres, apparaîtront plus clairement à la lecture de la description suivante d'un exemple de réalisation en se référant aux dessins annexés sur lesquels :
- la figure 1 est une représentation schématique de l'architecture de la boîte de vitesses selon l'invention,
- la figure 2 est une vue en coupe longitudinale de la boîte de vitesses selon l'invention dans la zone de la marche arrière synchronisée,
- la figure 3 est une vue en perspective du manchon de synchronisation selon l'invention,
- la figure 4 est une vue en perspective de l'anneau synchroniseur, et
- la figure 5 est une vue en section, selon la ligne V-V de la figure 2, illustrant les différentes phases de synchronisation de la marche arrière.

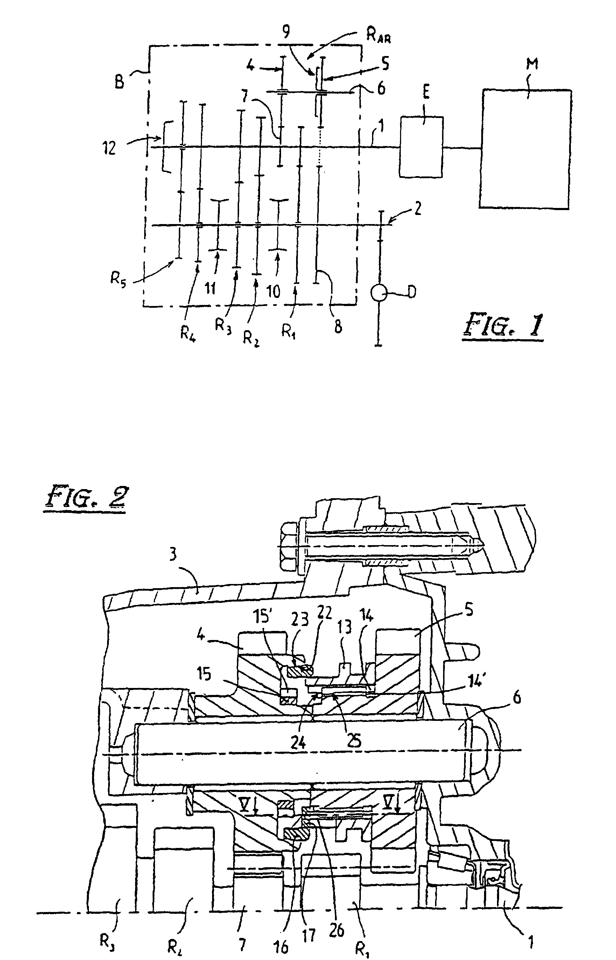

On a représenté à la figure 1, la transmission générale d'un véhicule automobile constituée d'un moteur à combustion interne M qui est relié à l'entrée d'un embrayage E et dont la sortie de celui-ci est reliée à l'entrée d'une boîte de vitesses B. Cette dernière est reliée en sortie aux roues du véhicule, non représenté, par l'intermédiaire d'un différentiel D, afin de transmettre la puissance du moteur M.

La boîte de vitesses comporte, classiquement, un arbre primaire 1, qui est relié à la sortie de l'embrayage E, et un arbre de sortie 2 montés parallèlement l'un à l'autre dans un carter 3 de la boîte de vitesses.

Chacun des arbres primaire 1 et de sortie 2 comporte une pluralité de pignons formant ainsi plusieurs paires de pignons en prise pour passer sur un nombre correspondant d'un rapport de transmission de marche avant. Chaque paire de pignons est montée sur leur arbre approprié de manière à ce que l'un des pignons soit fixe et l'autre fou.

La boîte de vitesses représentée à la figure 1, est pourvue de cinq rapports de marche avant R₁, R₂, R₃, R₄ et R₅ et d'un rapport de marche arrière R_{AR}.

Le rapport de marche arrière R_{AR} est réalisé par l'intermédiaire de deux roues folles 4, 5 tournant librement l'une contre l'autre, disposées sur un axe intermédiaire 6, désigné axe de marche arrière, qui est parallèle aux arbres primaire 1 et de sortie 2.

L'une des roues folles 4 est en prise avec un pignon fixe 7 sur l'arbre primaire 1 formant le pignon d'entraînement lors du rapport de marche R_{AR} et l'autre 5 est en prise sur un pignon fixe 8, désigné pignon récepteur de marche arrière, sur l'arbre de sortie 2.

Un dispositif de synchronisation 9 est disposé entre les deux roues folles 4, 5 de manière à assurer entre-elles une liaison permanente permettant ainsi le passage du rapport de marche arrière R_{AR}.

On notera que dans le mode de réalisation préféré de l'invention, le pignon fixe des paires de pignons formant les quatre premiers rapports de marche avant R₁, R₂, R₃,et R₄ est solidaire de l'arbre primaire 1 et le pignon fixe de la paire du cinquième rapport de marche avant R₅ est solidaire de l'arbre de sortie 2.

Des embrayages de synchronisations 10, 11 et 12 sont disposés aux voisinages des pignons fous respectivement deux 10, 11 sur l'arbre de sortie 2 d'une part entre le premier rapport de marche avant R₁, et le second R₂ et d'autre part entre le troisième rapport R₃ et le quatrième R₄ et un 12 au bout de l'arbre primaire 1.

Avantageusement, le pignon d'entraînement 7 de marche arrière est disposé entre la paire de pignons formant le premier rapport de marche avant R₁ et celle formant le second rapport R₂.

Selon la présente invention, le dispositif de synchronisation de marche arrière comprend, comme visible à la figure 2, un manchon de crabotage 13 qui est lié à l'une des roues folles 5, par l'intermédiaire d'un système à engrenage 14 et 14', et qui est apte à se déplacer axialement sous l'action d'un doigt de commande, non représenté, de manière à mettre en prise la roue folle 5 avec la roue 4 par accouplement des dentures intérieures 14 du manchon 13 avec les dentures extérieures 15' ou crabots d'une couronne de crabot 15 rendue solidaire, notamment par soudure, de la roue folle 4 qui est en prise avec le pignon d'entraînement 7.

On notera qu'il est possible de prévoir d'autres modes de liaison entre la couronne de crabot 15 et la roue folle 4, notamment en montant la couronne de crabot 15 folle sur l'axe de marche arrière 6. Cette couronne étant pourvue de cannelures ou dentures sur sa périphérie extérieure de manière à engréner avec des cannelures intérieures prévues sur le diamétre intérieure de la roue 4. Les cannelures de la couronne de crabot étant plus large que ceux de la roue de manière à pouvoir coopérer avec les dents ou cannelures 14 du manchon. La roue 4 étant immobilisée axialement sur la couronne par un anneau.

Un anneau synchroniseur 16 destiné à égaliser les vitesses de rotation des roues folles 4, 5 avant le crabotage du manchon 13 avec la couronne 15, est disposé coaxialement à la périphérie du manchon 13 et lié en rotation avec ce dernier, mais qui est apte à se déplacer axialement par rapport au manchon 13.

Comme visible aux figures 2, 3 et 4, cette liaison en rotation est réalisée par l'intermédiaire d'au moins deux pattes 17, perpendiculaires à l'arbre de marche arrière 6, et qui prolongent la face de l'anneau 16 dirigée du côté du manchon 13 de manière à coopérer respectivement avec une encoche 18 réalisée axialement sur ce dernier.

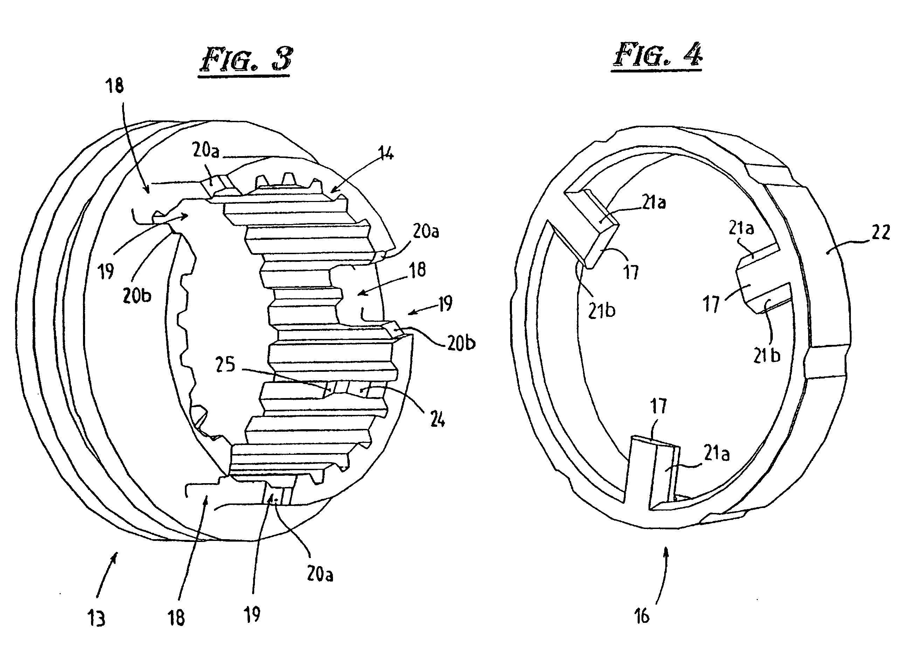

On notera que les pattes 17 sont, de préférence, au nombre de trois comme visible sur la figure 4, et disposées à 120° par rapport au centre de l'anneau 16 et contenues dans un même plan

Chacune des encoches 18 est pourvue d'une embouchure 19, visible à la figure 3, dont la largeur est supérieure à celle d'une patte 17 permettant ainsi une rotation relative entre l'anneau 16 et le manchon 13.

L'embouchure 19 est reliée à l'encoche 18 par l'intermédiaire de deux faces inclinées 20a, 20b formant les rampes de synchronisation du manchon 13. Ces dernières coopèrent avec les deux faces inclinées 21a, 21b réalisées sur chacune des faces, dirigées du côté du manchon 13, des pattes 17, formant ainsi les rampes de synchronisation de l'anneau 16.

L'anneau 16 comporte une surface conique extérieure 22 qui est apte à coopérer avec une surface conique 23 complémentaire réalisée sur une partie saillant axialement de la roue folle 4, en direction du manchon 13, comme visible à la figure 2.

Le manchon 13 est pourvu, classiquement, d'un système d'armement de synchronisation qui comprend sur trois des dents d'engrènement du manchon 13 sur la roue folle 5, réparties à 120° par rapport au centre du manchon, respectivement une rampe d'armement 24 et d'une contre-rampe 25 disposées axialement sur la dent ou cannelure 14, et qui sont aptes à coopérer avec un jonc élastique 26, visible à la figure 2.

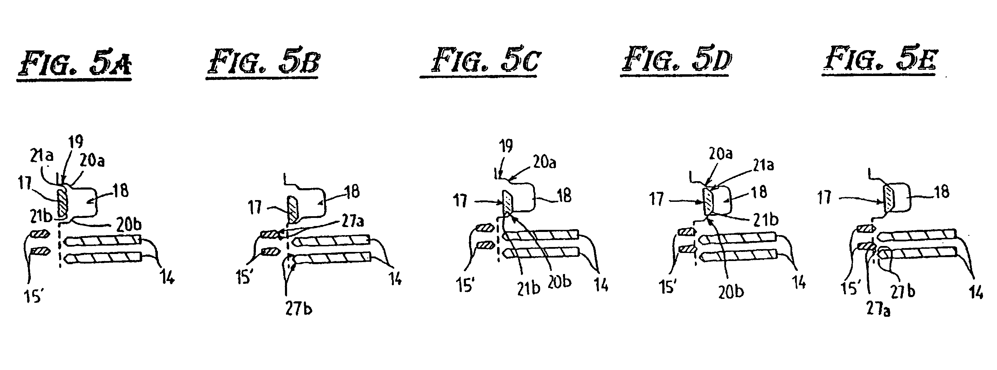

Le fonctionnement du dispositif de synchronisation de marche arrière va maintenant être expliqué en référence à la figure 5.

On a représenté à la figure 5a, le dispositif de synchronisation en position point mort, lorsque la marche arrière n'est pas enclenchée, la roue folle 4 engrène avec le pignon 7 à une vitesse périphérique égale à la vitesse de rotation de l'arbre primaire 1.

Lors de l'enclenchement de cette dernière, le manchon 13 est déplacé axialement vers la gauche, en se référant à la figure 2, la rampe d'armement 24 entraîne alors le jonc élastique 26 afin d'appliquer un effort de plaquage entre les surfaces coniques 22 et 23, respectivement de l'anneau 16 et de la roue folle 4.

Une rotation relative de compensation de l'anneau 16, par rapport au manchon 13, permet à ce dernier de commencer à égaliser les vitesses de rotation des deux roues folles 4 et 5, en plaquant les pattes 17 sur l'une des faces de l'embouchure 19, figure 5b.

Le déplacement du manchon entraîne ensuite la phase de synchronisation des vitesses des roues 4, 5, figures 5c et 5d, par accouplement par frottement des rampes de synchronisation 21a, 21b de l'anneau 16 avec les rampes de synchronisation 20a, 20b du manchon 13, où les pattes 17 sont engagées dans les encoches 18, la vitesse de rotation des deux roues est alors donnée par la vitesse de rotation du pignon récepteur 8 de marche arrière de l'arbre de sortie 2. Ce déplacement du manchon 13 entraîne également par coopération des rampes de synchronisation 21b et 20b respectivement des pattes 17 et du manchon 13, l'engagement des pattes 17 dans les encoches 18 comme visible à la figure 5d.

Avantageusement, on notera que l'anneau 16 comporte un diamétre extérieur supérieur au diamètre intérieur du manchon 13 afin de permettre d'accroître la rapidité de synchronisation des vitesses des deux roues folles 4 et 5.

Enfin, la phase de crabotage, figure 5e, est réalisée par accouplement des dents 15' et 14, respectivement de la couronne 15 et du manchon 13, qui sont pourvues classiquement, de surfaces inclinées 27a et 27b pour faciliter un engrènement mutuel, comme visible à la figure 5.

Lors de cette phase, la contre-rampe 25 libère l'effort de plaquage entre les surfaces coniques 22 et 23 respectivement de l'anneau 16 et de la roue 4, exercé par le jonc élastique 26.

Avantageusement, les pattes 17 ont une longueur suffisamment grande pour entrer en contact avec le jonc élastique 26 lors du déplacement du manchon 13 évitant ainsi d'avoir un armement résiduel, c'est-à-dire un effort de plaquage entre les surfaces coniques 22 et 25 lors de la phase de crabotage, ce qui est néfaste à l'agrément de passage du rapport de marche arrière.

On comprend à la lecture de la description qui précède, qu'un tel dispositif de synchronisation de marche arrière selon la présente invention, permet d'avoir un diamètre de cône 22 de synchroniseur optimal dans un encombrement réduit et également d'avoir une course de synchronisation très réduite de par la forme de l'anneau et du manchon, permettant ainsi une rapidité du passage de la marche arrière, et un meilleur agrément de passage c'est-à-dire sans bruit et sans à-coup.

Bien entendu, le dispositif de synchronisation de marche arrière décrit ci-dessus peut être inversé, c'est-à-dire que le manchon 13 peut être lié à la roue folle 4.

## Revendications

1. Boîte de vitesses avec marche arrière synchronisée, notamment pour véhicules automobiles, comportant un arbre primaire (1) et un arbre de sortie (2) montés parallèlement l'un à l'autre dans le carter (3) de boîte de vitesses et comportant plusieurs paires de pignons en prise pour passer sur un nombre correspondant de rapports de transmission de marche avant, ainsi qu'un axe de marche arrière (6), parallèle aux arbres primaire (1) et de sortie (6), sur lequel sont disposés d'une part deux roues folles (4, 5) tournant librement l'une contre l'autre dont l'une (4) est en prise avec un pignon fixe (7) sur l'arbre primaire (1) et l'autre (5) est en prise sur un pignon fixe sur l'arbre de sortie (2) et d'autre part un dispositif de synchronisation de la marche arrière (9) disposé entre les roues folles pouvant assurer entre elles une liaison permanente,
dans laquelle le dispositif de synchronisation de marche arrière (9) comprend d'une part un manchon de crabotage (13) qui est lié en rotation à l'une des roues folles (5), et qui est apte à se déplacer axialement sous l'action d'un doigt de commande de manière à mettre en prise la roue folle (5) avec l'autre roue folle (4),
**caractérisée en ce que** le manchon (13) est pourvu d'un système d'armement (24, 25) de synchronisation comprenant sur trois des dents d'engrènement (14) du manchon (13) réparties à 120° par rapport au centre du manchon, respectivement une rampe d'armement (24) et une contre-rampe (25) disposées axialement sur la dent (14), et qui sont aptes à coopérer avec un jonc élastique (26), **en ce que** le dispositif de synchronisation comprend un anneau synchroniseur (16) lié en rotation et disposé coaxialement à la périphérie du manchon (13), ce dernier étant apte à se déplacer axialement par rapport à l'anneau synchroniseur, **en ce que** l'anneau synchroniseur (16) est pourvu d'au moins deux pattes (17), perpendiculaires à l'axe de l'arbre de marche arrière (6), et qui prolongent la face dudit anneau (16) dirigée du côté du manchon (13) de manière à coopérer respectivement avec une encoche (18) réalisée axialement sur ce dernier et **en ce que** les pattes (17) ont une longueur suffisamment grande pour entrer en contact avec le jonc élastique (26) lors du déplacement axial du manchon (13).

2. Boîte de vitesses selon la revendication 1, **caractérisée en ce que** la mise en prise de la roue folle (5) avec la roue (4) est assurée par accouplement des dentures intérieures (14) du manchon (13) avec les dentures extérieures (15') d'une couronne de crabot (15) solidaire de la roue folle (4),

3. Boîte de vitesses selon la revendication 1 ou 2, **caractérisée en ce que** chacune des encoches (18) du manchon (13) est pourvue d'une embouchure (19), dont la largeur est supérieure à celle d'une patte (17), qui lui est reliée par l'intermédiaire de deux faces inclinées (20a, 20b) formant les rampes de synchronisation du manchon (13).

4. Boîte de vitesses selon la revendication 3, **caractérisée en ce que** chacune des pattes (17) est pourvue sur sa face dirigée du côté du machon (13) de deux faces inclinées (21a, 21b), formant les rampes de synchronisation de l'anneau (16) qui sont aptes à coopérer avec les faces inclinées (20a, 20b) du manchon (13).

5. Boîte de vitesses selon la revendication 4, **caractérisée en ce que** l'anneau (16) comporte une surface conique extérieure (22) qui est apte à coopérer avec une surface conique (23) complémentaire réalisée sur une partie saillant axialement de la roue folle (4) en direction du manchon (13).

6. Boîte de vitesses selon l'une des revendications précédentes, **caractérisée en ce que** l'anneau (16) comporte trois pattes (17) disposées à 120° par rapport à son centre.

7. Boîte de vitesses selon l'une des revendications précédentes, **caractérisée en ce que** l'anneau (16) comporte un diamètre exterieur supérieur au diamètre intérieur du manchon (13) permettant ainsi d'accroître la rapidité de synchronisation des vitesses des deux roues folles (4, 5).

8. Boîte de vitesses selon l'une des revendications précédentes, à cinq rapports de marche avant, **caractérisée en ce que** le pignon fixe des paires de pignons formant les quatre premiers rapports de marche avant est solidaire de l'arbre primaire (1) et **en ce que** le pignon fixe de la paire du cinquième rapport de marche avant est solidaire de l'arbre de sortie (2).

9. Boîte de vitesses selon la revendication 8, **caractérisée en ce que le** pignon d'entraînement (7) de marche arrière est disposé entre la paire de pignons formant le premier rapport de marche avant (R₁) et celle formant le second rapport (R₂).

## Patentansprüche

1. Schaltgetriebe mit synchronisiertem Rückwärtsgang, insbesondere für Kraftfahrzeuge, mit einer Antriebswelle (1) und einer Abtriebswelle (2), die parallel zueinander im Gehäuse (3) des Schaltgetriebes angeordnet sind, und mit mehreren Paaren von in Eingriff stehenden Ritzeln, um über eine entsprechende Anzahl von Vorwärtsgang-Übersetzungen zu schalten, sowie mit einer Rückwärtsgangachse (6), parallel zur Antriebswelle (1) und zur Abtriebswelle (2), auf der einerseits zwei Losräder (4, 5), die frei gegeneinander drehen, von denen eines (4) mit einem ortsfesten Ritzel (7) auf der Antriebswelle (1) in Eingriff steht und das andere (5) mit einem ortsfesten Ritzel auf der Abtriebswelle (2) in Eingriff steht, und andererseits eine Rückwärtsgang-Synchronisiervorrichtung (9) angeordnet sind, die sich zwischen den Losrädern befindet, und zwischen ihnen eine permanente Verbindung gewährleisten kann,
wobei die Rückwärtsgang-Synchronisiervorrichtung (9) eine Klauenkupplungsmuffe (13) aufweist, die mit einem der Losräder (5) in Drehverbindung steht und sich unter der Wirkung eines Steuerfingers axial so verschieben kann, daß sie das Losrad (5) mit dem anderen Losrad (4) in Eingriff bringt,
**dadurch gekennzeichnet, daß** die Muffe (13) mit einem Synchronisier-Aktivierungssystem (24, 25) versehen ist, das auf dreien der Eingriffzähne (14) der Muffe (13), die in bezug auf die Mitte der Muffe um 120° zueinander verteilt sind, je eine Aktivierungsrampe (24) und eine Gegenrampe (25) aufweist, die axial auf dem Zahn (14) angeordnet sind und mit einem Federring (26) zusammenwirken können, daß die Synchronisiervorrichtung einen Synchronisierring (16) aufweist, der mit der Muffe (13) drehverbunden und zu deren Peripherie koaxial angeordnet ist, wobei diese letztere sich axial in bezug auf den Synchronisierring bewegen kann, daß der Synchronisierring (16) mit mindestens zwei Laschen (17) versehen ist, die senkrecht zur Achse der Welle des Rückwärtsgangs (6) liegen und die die zur Muffe (13) hin gerichtete Fläche des Rings (16) verlängern, um je mit einer Aussparung (18), die axial auf der Muffe ausgebildet ist, zusammenwirken zu können, und daß die Laschen (17) eine ausreichend große Länge aufweisen, um während der axialen Verschiebung der Muffe (13) mit dem Federring (26) in Kontakt treten zu können.

2. Schaltgetriebe nach Anspruch 1, **dadurch gekennzeichnet, daß** das Eingreifen des Losrads (5) in das Losrad (4) durch Kupplung der Innenzahnungen (14) der Muffe (13) mit den Außenzahnungen (15') eines Klauenkranzes (15) gewährleistet wird, der fest mit dem Losrad (4) verbunden ist.

3. Schaltgetriebe nach Anspruch 1 oder 2, **dadurch gekennzeichnet, daß** jede der Aussparungen (18) der Muffe (13) mit einer Öffnung (19) versehen ist, deren Breite größer ist als diejenige einer Lasche (17), die mit ihr über zwei geneigte Flächen (20a, 20b) verbunden ist, welche die Synchronisierrampen der Muffe (13) bilden.

4. Schaltgetriebe nach Anspruch 3, **dadurch gekennzeichnet, daß** jede der Laschen (17) auf ihrer zur Muffe (13) weisenden Fläche mit zwei geneigten Flächen (21a, 21b) versehen ist, welche die Synchronisierrampen des Rings (16) bilden, die mit den geneigten Flächen (20a, 20b) der Muffe (13) zusammenwirken können.

5. Schaltgetriebe nach Anspruch 4, **dadurch gekennzeichnet, daß** der Ring (16) eine konische Außenfläche (22) aufweist, die mit einer komplementären konischen Fläche (23) zusammenwirken kann, die auf einem in Richtung der Muffe (13) axial vorspringenden Bereich des Losrads (4) ausgebildet ist.

6. Schaltgetriebe nach einem der vorhergehenden Ansprüche, **dadurch gekennzeichnet, daß** der Ring (16) drei Laschen (17) aufweist, die in bezug auf seine Mitte um 120° angeordnet sind.

7. Schaltgetriebe nach einem der vorhergehenden Ansprüche, **dadurch gekennzeichnet, daß** der Ring (16) einen Außendurchmesser aufweist, der größer ist als der Innendurchmesser der Muffe (13), wodurch es möglich ist, die Synchronisierungsschnelligkeit der Geschwindigkeiten der beiden Losräder (4, 5) zu steigern.

8. Schaltgetriebe nach einem der vorhergehenden Ansprüche mit fünf Vorwärtsgang-Übersetzungen, **dadurch gekennzeichnet, daß** das ortsfeste Ritzel der die ersten vier Vorwärtsgang-Übersetzungen bildenden Ritzelpaare fest mit der Antriebswelle (1) verbunden ist, und daß das ortsfeste Ritzel des Paars der fünften Vorwärtsgang-Übersetzung fest mit der Abtriebswelle (2) verbunden ist.

9. Schaltgetriebe nach Anspruch 8, **dadurch gekennzeichnet, daß** das Rückwärtsgang-Antriebsritzel (7) zwischen dem die erste Vorwärtsgang-Übersetzung (R₁) bildenden Ritzelpaar und dem die zweite Vorwärtsgang-Übersetzung (R₂) bildenden Ritzelpaar angeordnet ist.

## Claims

1. Gear box with synchronised reverse gear, in particular for motor vehicles, having an input shaft (1) and an output shaft (2) assembled parallel to one another in the gear box housing (3) and having several pairs of engaged pinions to change through a corresponding number of forward-gear transmission ratios, as well as a reverse gear axle (6), parallel to the input (1) and output (6) shafts, on which are arranged, on the one hand, two idler wheels (4, 5) turning freely against one another, of which one (4) is engaged with a fixed pinion (7) on the output shaft (2) and the other (5) is engaged a fixed pinion on the output shaft (2) and, on the other hand, a reverse-gear synchronisation device (9) arranged between the idler wheels, which is able to ensure a permanent link between them,
in which the reverse-gear synchronisation device (9) comprises on the one hand a jaw clutching sleeve (13), which is linked in rotation to one of the idler wheels (5), and which is capable of being displaced axially by the action of a control finger so as to engage the idler wheel (5) with the other idler wheel (4),
**characterised in that** the sleeve (13) is provided with a synchronisation setting system (24, 25) comprising, on three of the gear teeth (14) of the sleeve (13) distributed at 120° with respect to the centre of the sleeve, respectively a setting ramp (24) and a counter-ramp (25) arranged axially on the tooth (14), and which are capable of co-operating with a resilient retaining ring (26), **in that** the synchronisation device comprises a synchroniser ring (16) linked in rotation and arranged coaxially with the periphery of the sleeve (13), the latter being capable of being displaced axially with respect to the synchroniser ring, **in that** the synchroniser ring (16) is provided with at least two tabs (17), perpendicular to the axle of the reverse gear shaft (6), and which extend the face of said ring (16) that faces the side of the sleeve (13) so as to co-operate respectively with a notch (18) made axially on the latter and **in that** the tabs (17) are long enough to come into contact with the resilient retaining ring (26) during the axial displacement of the sleeve (13).

2. Gear box according to Claim 1, **characterised in that** the engaging of the idler wheel (5) with the wheel (4) is ensured by coupling of the inner teeth (14) of the sleeve (13) with the outer teeth (15') of a clutch sleeve crown (15) integral with the idler wheel (4).

3. Gear box according to Claim 1 or 2, **characterised in that** each of the notches (18) of the sleeve (13) is provided with an opening (19), the width of which is greater than that of a tab (17), which is connected thereto via two inclined faces (20a, 20b) forming the synchronisation ramps of the sleeve (13).

4. Gear box according to Claim 3, **characterised in that** each of the tabs (17) is provided, on its face facing towards the side of the sleeve (13), with two inclined faces (21a, 21b), forming the synchronisation ramps of the ring (16), which are capable of co-operating with the inclined faces (20a, 20b) of the sleeve (13).

5. Gear box according to Claim 4, **characterised in that** the ring (16) has an outer conical surface (22) that is capable of co-operating with a complementary conical surface (23) produced on a portion of the idler wheel (4) projecting axially in the direction of the sleeve (13).

6. Gear box according to one of the preceding claims, **characterised in that** the ring (16) has three tabs (17) arranged at 120° with respect to its centre.

7. Gear box according to one of the preceding claims, **characterised in that** the ring (16) has an external diameter greater than the internal diameter of the sleeve (13) thus allowing the rapidity of synchronisation of the speeds of the two idler wheels (4, 5) to be increased.

8. Gear box according to one of the preceding claims, with five forward-gear ratios, **characterised in that** the fixed pinion of the pairs of pinions forming the first four forward-gear ratios is integral with the input shaft (1) and **in that** the fixed pinion of the pair of the fifth forward-gear ratio is integral with the output shaft (2).

9. Gear box according to Claim 8, **characterised in that** the reverse-gear drive pinion (7) is arranged between the pair of pinions forming the first forward-gear ratio (R₁) and that forming the second ratio (R₂).
